# EUROPEAN PATENT APPLICATION

(11) **EP 3 188 091 A1**
(43) Date of publication of application: **05.07.2017**
(21) Application number: 16195441.7
(22) Date of filing: 25.10.2016
(51) Int. Cl.: G06Q 10/02, G06Q 50/14

(54) **PASSENGER COMMUNICATIONS SYSTEM**

(30) Priority: 29.12.2015 US 201514982499
(71) Applicant: The Boeing Company, Chicago, IL 60606-1596 (US)
(72) Inventor: KAJAK, Pawel G., Chicago, IL Illinois 60606-2016 (US)
(74) Representative: Morrall, Jonathan Ian McLachlan

(57) **Abstract**

A method and apparatus for managing an aircraft departure. The method comprises identifying locations (228) of passengers (202) for a flight (206) of an aircraft at an airport (102) through boarding applications (222) on client devices (216) for the passengers (202). Further, the method comprises displaying location information (232) about the passengers (202) on display system (230), wherein the location information (232) is based on the locations (228) of the passengers (202) at the airport (102). Yet further, the method comprises sending notifications (236), initiated by a boarding crew (212) for the flight (206), to a group of the boarding applications (222) on the client devices (216).

## Description

### 1. Field:

The present disclosure relates generally to an improved communication system and, in particular, to a method and apparatus for communicating with passengers. Still more particularly, the present disclosure relates to a method and apparatus for exchanging communications between passengers and boarding crew at an airport.

### 2. Background:

In operating flights, airlines are concerned with reducing the occurrence of delays in the amount of time spent in the ground phase of a flight. Delays in operations caused by an airline that increase the time of the ground phase of operation of an aircraft may result in airport charges being assessed to the airline.

When the delays are too long, the takeoff slot allocated to the airline may be lost. A takeoff slot is a right granted by the airport to schedule a departure at a specific time. If the delay in boarding to depart from the gate is too long, that timeslot may be missed. As a result, the airline may need to use a different slot. If the airline does not have enough slots for the flight, the airline may need to trade slots or buy slots from another airline.

One type of delay of concern to airlines is late or missing passengers. A passenger who is running late causes the aircraft for the flight to leave the gate and reach the runway later than scheduled if the flight is held to allow the passenger to board the aircraft.

In another example, the passenger may be missing. The boarding crew may not know that the passenger is not at the airport or is unable to board the flight, even though the passenger has checked-in for the flight. Although a passenger may have checked-in for the flight, the passenger may still not be able to make it to the gate prior to the boarding crew closing the door to the boarding ramp.

For example, many airlines allow passengers to check-in using an online check-in process. This type of process often allows a passenger to check-in from home 24 hours prior to a flight. In this case, the flight may be delayed unless a decision is made to close the boarding gate at a certain time even if those passengers are within a short distance of the gate.

In still another example, a passenger may be present at the airport, but may be unaware that boarding has already begun for the flight. As a result, the passenger may not move towards the boarding area as soon as needed to avoid delaying the flight. Although the boarding crew may use a public announcement (PA) system to announce boarding and final calls for boarding a flight, a passenger may be unable to hear the announcement or may not pay attention to the announcement made for a flight that is boarding.

Therefore, it would be desirable to have a method and apparatus that take into account at least some of the issues discussed above, as well as other possible issues. For example, it would be desirable to have a method and apparatus that overcome a technical problem with delays in flights caused by late or missing passengers.

### SUMMARY

An embodiment of the present disclosure provides an airport communications system for boarding an aircraft. The airport communications system comprises a display system and a boarding manager in communication with the display system. The boarding manager is configured to identify locations of passengers for a flight of the aircraft at an airport through boarding applications on client devices for the passengers. Further, the boarding manager is configured to display location information about the passengers on the display system, in which the location information is based on the locations of the passengers at the airport. Yet further, the boarding manager is configured to send notifications, initiated by a boarding crew for the flight, to a group of the boarding applications on the client devices.

Another embodiment of the present disclosure provides a method for managing an aircraft departure. The method comprises identifying locations of passengers for a flight of an aircraft at an airport through boarding applications on client devices for the passengers. Further, the method comprises displaying location information about the passengers on a display system, wherein the location information is based on the locations of the passengers at the airport. Yet further, the method comprises sending notifications, initiated by a boarding crew for the flight, to a group of the boarding applications on the client devices.

Yet another embodiment of the present disclosure provides an airport communications system for boarding an aircraft. The airport communications system comprises a boarding manager configured to identify locations of passengers at an airport for a flight of the aircraft departing from the airport through boarding applications on client devices for the passengers. Further, the boarding manager is configured to coordinate boarding activities between a boarding crew for the flight using communications sent to the boarding applications from the boarding crew by the boarding manager, based on the locations of the passengers in the airport.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is an illustration of an airport environment in accordance with an illustrative embodiment;
**Figure 2** is an illustration of a block diagram of a transportation environment in accordance with an illustrative embodiment;
**Figure 3** is an illustration of a message flow diagram for registering a passenger for a specific flight in accordance with an illustrative embodiment;
**Figure 4** is an illustration of a message flow diagram for updating the boarding status of the flight in accordance with an illustrative embodiment;
**Figure 5** is an illustration of a message flow diagram for updating the location of a passenger in accordance with an illustrative embodiment;
**Figure 6** is an illustration of a message flow diagram for sending a notification to a passenger in accordance with an illustrative embodiment;
**Figure 7** is an illustration of a flowchart of a process for managing an aircraft departure in accordance with an illustrative embodiment;
**Figure 8** is an illustration of a flowchart of a process for generating location information in accordance with an illustrative embodiment;
**Figure 9** is an illustration of a flowchart of a process for generating notifications when passengers are unable to reach the gate within a desired amount of time in accordance with an illustrative embodiment; and
**Figure 10** is an illustration of a block diagram of a data processing system in accordance with an illustrative embodiment.

### DETAILED DESCRIPTION

The illustrative embodiments recognize and take into account one or more different considerations. The illustrative embodiments recognize and take into account that improved management of passengers for a flight may reduce delays in an aircraft departing from a gate at an airport. The illustrative embodiments recognize and take into account that current passenger boarding systems do not provide sufficient information to the boarding crew to reduce delays. The illustrative embodiments recognize and take into account that an improved communications system would reduce delays in the departure of an aircraft from a gate.

The illustrative embodiments provide a method and apparatus for boarding an aircraft. In one illustrative example, an airport communications system for boarding an aircraft comprises a display system and a boarding manager. The boarding manager is in communication with the display system. The boarding manager is configured to identify locations of passengers for a flight at an airport through boarding applications on client devices for the passengers and display location information about the passengers on the display system. The location information is based on the locations of the passengers at the airport. The boarding manager is configured to send notifications, initiated by a boarding crew for the flight, to a group of the boarding applications on the client devices.

As used herein, "a group of", when used with reference to items, means one or more items. For example, "a group of boarding applications" is one or more boarding applications.

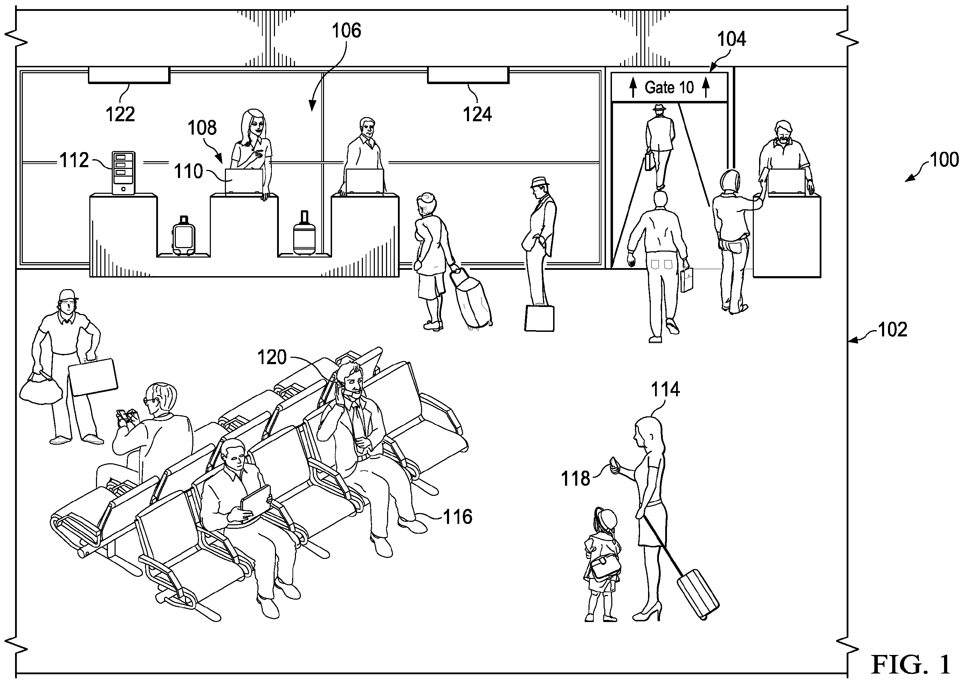

With reference now to **Figure 1****,** an illustration of an airport environment is depicted in accordance with an illustrative embodiment. Airport environment **100** includes airport **102**. In this example, airport **102** has gate **104**. Gate **104** is an area inside airport **102** where passengers may wait to board an aircraft.

In this illustrative example, boarding crew **106** manages the boarding of a flight for an aircraft at gate **104**. As depicted, boarding crew **106** manages the boarding of an aircraft for departure from gate **104**. In this example, display system **108** for computer **110** is located at gate **104**.

As depicted, server computer **112** is in communication with display system **108** through computer **110**. Server computer **112** sends information that is displayed on display system **108** for use by boarding crew **106**.

In this illustrative example, passengers such as passenger **114** and passenger **116** are at airport **102** for a flight departing from gate **104**. In this example, passenger **114** has mobile phone **118** and passenger **116** has mobile phone **120**. Mobile phone **118** and mobile phone **120** run boarding applications that communicate with server computer **112** through wireless access ports, such as wireless access port **122** and wireless access port **124**.

In this illustrative example, boarding crew **106** coordinates boarding of the flight with passengers for the flight. For example, the coordination may be with passenger **114** and passenger **116**, using the boarding applications on mobile phone **118**, mobile phone **120**, and server computer **112**. The coordination may include at least one of sending notifications to passenger **114** and passenger **116,** receiving receipts from passenger **114** and passenger **116,** receiving responses from passenger **114** and passenger **116,** identifying locations of passenger **114** and passenger **116,** and other operations that may be performed to coordinate boarding.

As used herein, the phrase "at least one of", when used with a list of items, means different combinations of one or more of the listed items may be used, and only one of each item in the list may be needed. In other words, "at least one of" means any combination of items and number of items may be used from the list, but not all of the items in the list are required. The item may be a particular object, thing, or a category.

For example, without limitation, "at least one of item A, item B, or item C" may include item A, item A and item B, or item B. This example also may include item A, item B, and item C or item B and item C. Of course, any combinations of these items may be present. In some illustrative examples, "at least one of" may be, for example, without limitation, two of item A; one of item B; and ten of item C; four of item B and seven of item C; or other suitable combinations.

For example, mobile phone **118** and mobile phone **120** receive flight information. The flight information may include departure time, gate number, or other suitable flight information. As another example, boarding crew **106** may send notifications for boarding, last call to board, delays, or other notifications for the flight.

When the boarding applications provide for two-way communications, the boarding applications may send receive receipts indicating notifications from boarding crew **106** have been received. The boarding applications also may send responses entered by passenger **114** and passenger **116** into mobile phone **118** and mobile phone **120**, respectively. This information is received by server computer **112** through wireless access port **122** or wireless access port **124** and may be displayed on display system **108**.

Boarding applications on mobile phone **118** and mobile phone **120** may also be used to identify the locations of passenger **114** and passenger **116** at airport **102**. The location may identified using global positioning information transmitted by the boarding applications, triangulation signals, entry of a location by passenger **114** and passenger **116**, or in some other suitable manner. The locations may be received by server computer **112** through wireless access port **122** or wireless access port **124**, and may be displayed on display system **108**.

The illustration of airport environment **100** in **Figure 1** is not meant to imply limitations to the manner in which other illustrative embodiments may be implemented. For example, server computer **112** may provide coordination of passengers and boarding crew for other gates at airport **102** or in other airports. As another example, one or more server computers may be present in addition to server computer **112**. In still another example, computer **110** may function as server computer **112**.

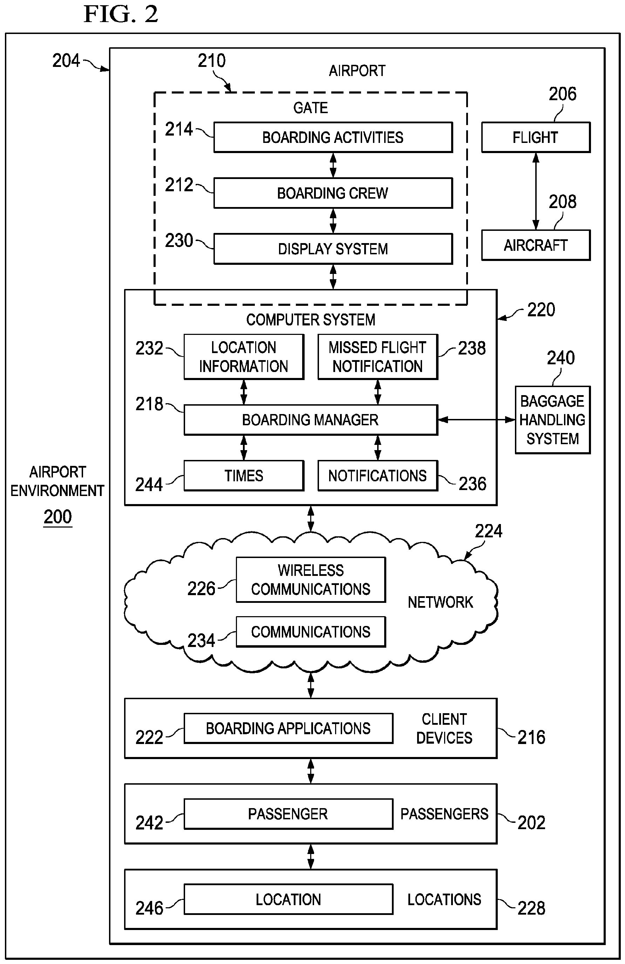

With reference now to **Figure 2**, an illustration of a block diagram of a transportation environment is depicted in accordance with an illustrative embodiment. In this example, airport environment **100** in **Figure 1** is an example of one implementation for airport environment **200** shown in block form.

As depicted, passengers **202** may be located at airport **204** for flight **206** on aircraft **208**. Passengers **202** may be some or all of the passengers for flight **206**.

Flight **206** departs from gate **210** at airport **204**. Boarding crew **212** manages the boarding of aircraft **208** from gate **210** for flight **206** of aircraft **208**. Boarding crew **212** is one or more people.

In this illustrative example, boarding crew **212** performs boarding activities **214** for flight **206** for aircraft **208**. Boarding activities **214** include at least one of starting the boarding of aircraft **208**, making a final boarding call, closing the gate, assigning seats, locating missing passengers, managing the scanning of boarding passes at a jetway door, and other activities that occur such that flight **206** of aircraft **208** is ready to depart from gate **210**.

As depicted, passengers **202** have client devices **216**. Client devices **216** are physical hardware and may be selected from at least one of a mobile phone, a tablet computer, a laptop computer, or some other suitable data processing system that may be carried by passengers **202**. In this illustrative example, client devices **216** provide communications for passengers **202**. These communications may include at least one of voice communications, text messages, Internet access, and other suitable types of information exchange.

In this illustrative example, boarding manager **218** operates to coordinate boarding activities **214** between boarding crew **212** and passengers **202**. Boarding manager **218** may be implemented in software, hardware, firmware, or a combination thereof. When software is used, the operations performed by boarding manager **218** may be implemented in program code configured to run on hardware, such as a processor unit. When firmware is used, the operations performed by boarding manager **218** may be implemented in program code and data, and stored in persistent memory to run on a processor unit. When hardware is employed, the hardware may include circuits that operate to perform the operations in boarding manager **218**.

In the illustrative examples, the hardware may take the form of a circuit system, an integrated circuit, an application specific integrated circuit (ASIC), a programmable logic device, or some other suitable type of hardware configured to perform a number of operations. With a programmable logic device, the device may be configured to perform the number of operations. The device may be reconfigured at a later time or may be permanently configured to perform the number of operations. Programmable logic devices include, for example, a programmable logic array, a programmable array logic, a field programmable logic array, a field programmable gate array, and other suitable hardware devices. Additionally, the processes may be implemented in organic components integrated with inorganic components and may be comprised entirely of organic components, excluding a human being. For example, the processes may be implemented as circuits in organic semiconductors.

As depicted, boarding manager **218** is located in computer system **220**, which is a physical hardware system and includes one or more data processing systems. When more than one data processing system is present, those data processing systems are in communication with each other using a communications medium. The communications medium may be a network, such as network **224** or another network separate from network **224**. The data processing systems may be selected from at least one of a computer, a server computer, a tablet, or some other suitable data processing system.

Boarding applications **222** are located on client devices **216**. Boarding manager **218** and boarding applications **222** on client devices **216** may exchange communications **234** over network **224**. Network **224** is a physical hardware system and provides wireless communications **226** between boarding applications **222** on client devices **216** and computer system **220**. For example, network **224** may include switches, routers, wireless access ports, and other suitable components.

For example, boarding manager **218** is configured to receive communications **234** from boarding applications **222**. In another example, boarding manager **218** may send communications **234** to boarding applications **222**. In this manner, interaction between the boarding crew and the passengers is enabled through boarding applications **222** on client devices **216**.

In the illustrative example, boarding manager **218** coordinates boarding activities **214** between boarding crew **212** and passengers **202**. The coordination is enabled or enhanced through communications **234** and occurs in a manner that reduces delays in the departure of aircraft **208** from gate **210**.

Boarding manager **218** is configured to identify locations **228** of passengers **202** for flight **206** of aircraft **208** at airport **204**. The identification of locations **228** is performed through boarding applications **222** on client devices **216** for passengers **202**. In other words, the location of client devices **216** may be enabled through boarding applications **222**.

For example, boarding applications **222** may transmit global positioning system information with locations **228** for client devices **216** in communications **234**. As another example, boarding applications **222** may transmit indications that client devices **216** are for passengers **202** in communications **234**. With the indications, location techniques based on signal strengths, such as triangulation, may be used to identify locations **228** for client devices **216** transmitting the indications.

In one illustrative example, global positioning system information and indications may be transmitted only when boarding applications **222** are enabled, client devices **216** are at airport **204**, or some combination thereof. This configuration of boarding applications **222** takes into account passenger concerns about privacy.

In yet another example, passengers **202** may enter locations **228** into boarding applications **222**. This option may be used for passengers **202** that have concerns about being tracked through client devices **216**.

As depicted, locations **228** for passengers **202** are identified in real time. In other words, locations **228** are identified as quickly as possible without any intentional delay.

Boarding manager **218** is in communication with display system **230**. Display system **230** is a physical hardware system and includes one or more display devices. The display devices may include at least one of a light emitting diode (LED) display, a liquid crystal display (LCD), an organic light emitting diode (OLED) display, or some other suitable device. Display system **230** is located where boarding crew **212** may view display system **230**. Display system **230** may be attached to a data processing system that is in communication with boarding manager **218**. The data processing system may be a desktop computer, a kiosk, a tablet computer, a mobile phone, or some other suitable type of data processing system.

Boarding manager **218** generates location information **232** about passengers **202** using locations **228** identified for passengers **202**. As depicted, location information **232** is based on locations **228** of passengers **202** at airport **204**. Location information **232** includes at least one of a current location, a direction of travel, a distance to the boarding gate, a time needed to reach the boarding gate, or some other suitable information.

Additionally, boarding manager **218** displays location information **232** about passengers **202** on display system **230**. Boarding manager **218** also sends notifications **236**, initiated by a boarding crew for the flight, to a group of boarding applications **222** on client devices **216**.

Notifications **236** are examples of communications **234**. As depicted, notifications **236** may be selected from at least one from of a boarding notification, a delay notification, a time needed to reach a gate for the flight, a remaining time before boarding starts, a remaining time before boarding ends, a suggested route to the gate, a final call for boarding, a missed flight notification, or some other suitable notification.

Further, in addition to enabling coordination between boarding crew **212** and passengers **202**, boarding manager **218** also enables coordination with other entities or systems at airport **204** as part of boarding activities **214** for flight **206** of aircraft **208**. For example, boarding manager **218** sends missed flight notification **238** to baggage handling system **240** for flight **206** when passenger **242** in passengers **202** is identified as unable to board aircraft **208** for flight **206**.

In this illustrative example, missed flight notification **238** may be initiated by boarding crew **212** interacting with boarding manager **218**. For example, passenger **242** may be identified as having location **246** in locations **228** that is too far from gate **210** to reach gate **210** within a desired amount of time. Boarding crew **212** may determine that passenger **242** will reach gate **210** at a time when flight **206** will lose a slot for takeoff from airport **204**.

As depicted, boarding manager **218** may determine whether passenger **242** is present at airport **204** by identifying location **246** of passenger **242**. As depicted, location **246** may be an indication that passenger **242** is not present at airport **204**. In still another illustrative example, location **246** of passenger **242** may be one that is outside of airport **204** and too far to reach gate **210** within a desired amount of time.

By sending missed flight notification **238** to baggage handling system **240**, the baggage for passenger **242** may be removed from aircraft **208** if the baggage has already been loaded onto aircraft **208**. For example, passenger **242** may have checked-in for flight **206**, checked baggage at airport **204**, then left airport **204**, and is now too far to return in time to reach gate **210** for flight **206**.

Boarding manager **218** aids boarding crew **212** in making these types of determinations in a number of different ways. For example, boarding manager **218** may estimate times **244** for passengers **202** to reach gate **210** based on locations **228** of passengers **202**.

Passengers **202** may be encouraged to install and use boarding applications **222**. This encouragement may take various forms. For example, passengers **202** using boarding applications **222** on client devices **216** are provided with incentives. These incentives may include at least one of frequent flier miles, discounts, priority boarding, gifts, and other suitable incentives.

In installing boarding applications **222**, boarding manager **218** is configured to send a boarding application to a client device when the boarding application is requested by the client device. A passenger may initiate the request from the client device when at airport **204** or in some other location outside of airport **204**.

The passenger may request the boarding application from a digital distribution platform for mobile applications. These digital distribution platforms download applications directly to client devices **216**, such as mobile phones and tablet computers.

In one illustrative example, one or more technical solutions are present that overcome a technical problem with delays in flights caused by late or missing passengers. As a result, one or more technical solutions may provide a technical effect of reducing delays in the departure of aircraft **208** from airport **204**. One of the technical solutions allows for faster identification when passenger **242** may be unable to reach gate **210** within a desired amount of time. Additionally, the one or more technical solutions may allow boarding crew **212** to take actions that enable passenger **242** to reach gate **210** within the desired amount of time. For example, boarding crew **212** may send a notification, a cart to pick up passenger **242**, a crew member to assist passenger **242**, or some other suitable action that results in passenger **242** not missing flight **206** of aircraft **208**.

As a result, computer system **220** operates as a special purpose computer system, in which boarding manager **218** in computer system **220** enables coordinating boarding activities **214** between boarding crew **212** and passengers **202**. In particular, boarding manager **218** transforms computer system **220** into a special purpose computer system as compared to currently available general computer systems that do not have boarding manager **218**.

For example, boarding manager **218** in computer system **220** functions as an airport communications system using network **224** at airport **204**. In this manner communications may be exchanged between boarding crew **212** and passengers **202** in a manner to more efficiently perform boarding activities **214**.

When functioning as an airport communication system, boarding manager **218** in computer system **220** provides an improved exchange of communications **234** for boarding a particular flight of an aircraft as compared to current systems found at airports. For example, boarding manager **218** in computer system **220** may provide for sending and receiving communications **234** between boarding crew **212** and passengers in locations **228**.

Thus, with boarding manager **218**, airlines and other operators of aircraft may increase the predictability of ground operations in boarding for departures of aircraft. In the illustrative examples, identification of locations **228** for passengers **202** may be made during preboarding or while boarding of aircraft **208** occurs at gate **210**.

With this information, boarding crew **212** may have the information needed to support making decisions with respect to passengers **202**. For example, boarding crew **212** may be able to make decisions as to whether to unload baggage for one or more of passengers **202**, wait for late passengers **202**, or other types of decisions with respect to preparing aircraft **208** for departure.

Further, as illustrated, boarding crew **212** and passengers **202** may more easily interact with each other through communications **234** that are exchanged between boarding applications **222** and boarding manager **218**. Further, boarding crew **212** may interact with a specific passenger amongst passengers **202** or may interact with all of passengers **202** using communications **234**.

The illustration of airport environment **200** in **Figure 2** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

For example, boarding manager **218** may be located in a single location at airport **204** within computer system **220**. In another illustrative example, boarding manager **218** may be located on another computer system or a distributed portion of computer system **220** that may be in another location outside of airport **204**.

Further, boarding manager **218** may be distributed among more than one data processing system. Also, boarding manager **218** may be used to coordinate activities for one or more gates and one or more boarding crews in addition to gate **210** in boarding crew **212**.

Further, communications **234** may take various forms in addition to the examples above in enabling coordination between boarding crew **212** and passengers **202**. For example, communications **234** sent by the group of boarding applications **222** may be selected from at least one of a receive receipt for a notification sent to the group of boarding applications **222**, a response to a notification sent by boarding manager **218** in which the response is generated by user input to a boarding application, or some other suitable type of communication.

As another example, communications **234** also may send flight status information for the flight that is sent by boarding manager **218** to boarding applications **222**. The flight status information may be selected from at least one of gate information, terminal information, a flight status, delays, cancellations, a connecting flight status, or other suitable information.

In yet another illustrative example, boarding manager **218** may send other information in addition to information about flight **206**. For example, boarding manager **218** may send communications containing information about stores, food courts, restrooms, or other facilities or amenities at airport **204**.

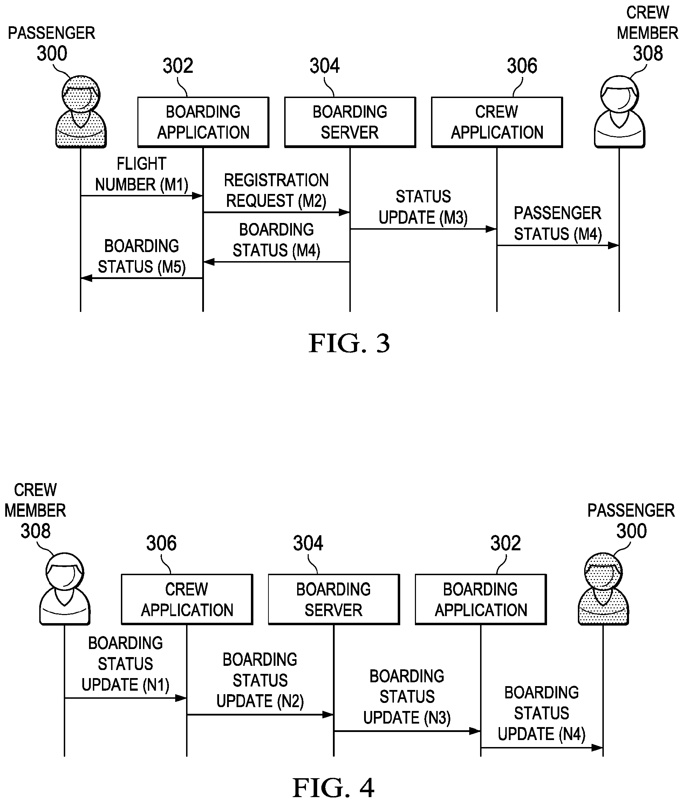

With reference now to **Figure 3**, an illustration of a message flow diagram for registering a passenger for a specific flight is depicted in accordance with an illustrative embodiment. In this illustrative example, the components involved in passenger registration are passenger **300**, boarding application **302**, boarding server **304**, crew application **306**, and crew member **308**.

In this illustrative example, boarding application **302** may be a boarding application in boarding applications **222** in **Figure 2**. Boarding server **304** and crew application **306** are examples of components that may be in boarding manager **218** in **Figure 2**.

As depicted, boarding server **304** provides the processing of information, and crew application **306** is a user interface that displays the information. Boarding server **304** is located in a computer system and may be at the airport, an airline data center, or some other suitable location.

Crew application **306** is located on a client device operated by a crew member. The client device may be, for example, a desktop computer, a mobile phone, a tablet computer, a laptop computer, a kiosk, or some other suitable type of data processing system.

In this illustrative example, passenger **300** registers for a specific flight. As depicted, passenger **300** inputs a flight number in user input into boarding application **302** (message **M1**).

With the user input, boarding application **302** sends a registration request (message **M2**) to boarding server **304**. In this illustrative example, the registration request may include other information such as a confirmation number, a certificate, a user identifier, a password, or other information for passenger **300**. In this illustrative example, the registration request in message **M2** is sent over a wireless communications link.

Boarding server **304** processes the registration request received from boarding application **302**. If the registration is successful, boarding server **304** sends a status update for passenger **300** (message **M3).**

In response to receiving the status update for passenger **300**, crew application **306** displays a passenger status for passenger **300** to crew member **308** (message **M4**). The passenger status displayed on crew application **306** is viewed by crew member **308**.

Additionally, boarding server **304** also sends a boarding status of the flight for which passenger **300** registered to boarding application **302** (message **M5**). Boarding application **302** displays the boarding status (message **M6**). As depicted, passenger **300** views the boarding status displayed by boarding application **302**.

Turning to **Figure 4**, an illustration of a message flow diagram for updating the boarding status of a flight is depicted in accordance with an illustrative embodiment. In this illustrative example, crew member **308** enters a boarding status update into crew application **306** (message **N1**). Crew application **306** sends a boarding status update to boarding server **304** (message **N2**).

In response to receiving the boarding status update in message **N2**, boarding server **304** sends the boarding status update to boarding application **302** (message **N3**). Boarding application **302** displays the boarding status update to passenger **300** (message **N4**). The boarding status update in message **N4** is viewed by passenger **300**.

In this illustrative example, the boarding status update may be sent to each mobile application that has been registered for the particular flight. As a result, message **N3** may be transmitted to boarding applications on multiple client devices for the particular flight.

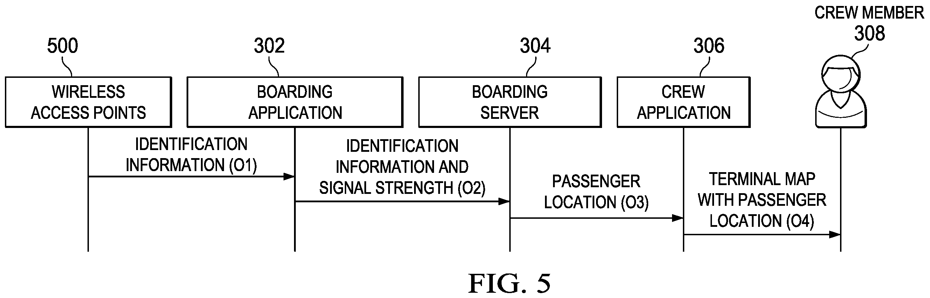

With reference now to **Figure 5**, an illustration of a message flow diagram for updating the location of a passenger is depicted in accordance with an illustrative embodiment. In this illustrative example, the location of a passenger may be identified based on signal strengths and other information obtained from transmissions by wireless access points at the airport.

As depicted, wireless access points **500** send identification information over wireless signals to boarding application **302** (message **O1**). In this illustrative example, wireless access points **500** may be existing wireless access points at the airport. In this manner, adding additional infrastructure may be avoided. In other illustrative examples, additional or an entirely different set of wireless access points may be used depending on the implementation.

The identification information in message **O1** sent by wireless access points **500** includes at least one of a service set identifier (SSID), a media access control (MAC) address, and other suitable information for each of the wireless access points. In message **O1**, the wireless signals have signal strengths that are identified by boarding application **302**.

For example, wireless access points broadcast information such as their service set identifiers and media access control addresses over wireless signals having a specific frequency. The strength of the wireless signals is the amount of energy that is detected by the receiving antenna in a unit of time. The measured signal strength from an access point depends on the relative distance between the signal access point and the receiver in a client device. The client device detects the signal that contains the information from a specific access point and measures the signal strength. The measurement of the signal strength may be performed under the control of boarding application **302** in the client device in this illustrative example. In this illustrative example, boarding application **302** transmits the identification information and the signal strengths to boarding server **304** (message **O2**).

In response to receiving the identification information and the signal strengths in message **O2**, boarding server **304** identifies the passenger location for passenger **300** (not shown). In this illustrative example, boarding server **304** identifies the location of each of the wireless access points using the identification information. As depicted, the database may contain locations of wireless access points having corresponding service set identifiers (SSIDs) and media access control (MAC) addresses for the wireless access points in the database.

Based on the signal strengths, boarding server **304** identifies the passenger location. In this example, the identification of the passenger location may be performed using triangulation or other types of location processes. Boarding server **304** sends the passenger location for passenger **300** (not shown) to crew application **306** (message **O3**). Crew application **306** displays a terminal map with passenger locations, including the passenger location received in from boarding server **304**, to crew member **308** (message **O4**). The terminal map with passenger locations is viewed by crew member **308** in this illustrative example.

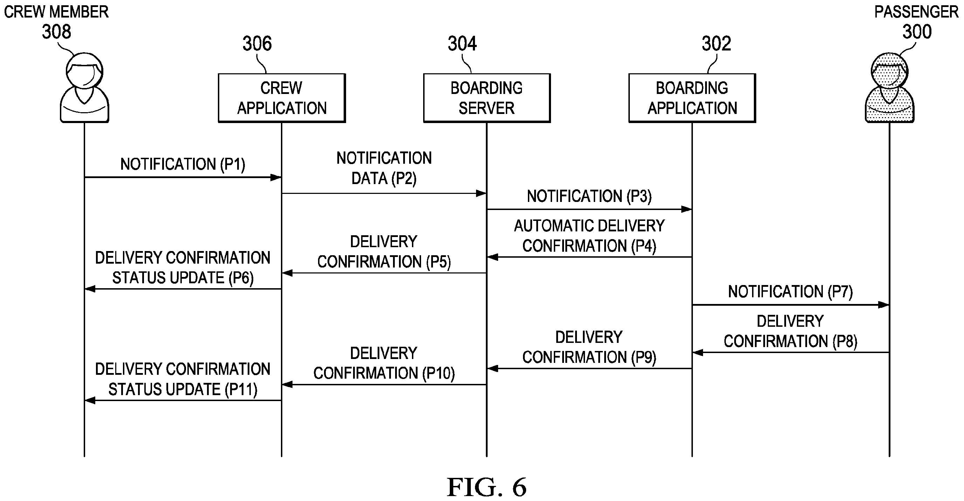

Turning now to **Figure 6**, an illustration of a message flow diagram for sending a notification to a passenger is depicted in accordance with an illustrative embodiment. As depicted, crew member **308** enters a notification in user input to crew application **306** (message **P1**). Crew application **306** sends notification data to boarding server **304** (message **P2**). In this illustrative example, the notification data includes an identification of passenger and the notification to be sent to the passenger. The notification may take various forms. For example, the notification may be "boarding has started", "last call for boarding", a gate change, a delay, a remaining time before boarding starts, a remaining time before boarding ends, a suggested route to the gate, or other suitable types of notifications. In response to receiving the notification data from crew application **306** in message **P2**, boarding server **304** sends a notification to boarding application **302** for the specific passenger (message **P3**). Boarding application **302** returns an automatic delivery confirmation to boarding server **304** (message **P4**). This automatic delivery confirmation is made automatically by boarding application **302** when the notification is received in message **P3**, and does not require any user input by passenger **300**.

When boarding server **304** receives the automatic delivery confirmation, boarding server **304** sends a delivery confirmation to crew application **306** (message **P5**). In turn, crew application **306** displays a delivery confirmation status update for the passenger to crew member **308** (message **P6**). Message **P6** indicates that the notification was received by boarding application **302**.

In this illustrative example, when boarding application **302** receives the notification in message **P3**, boarding application **302** also displays the notification to passenger **300** (message **P7**). As depicted, the display of the notification in message **P7** also includes a request for a confirmation to be made by passenger **300**. Passenger **300** enters a delivery confirmation in user input to boarding application **302** (message **P8**).

Boarding application **302** sends the delivery confirmation entered by passenger **300** to boarding server **304** (message **P9**). In turn, boarding server **304** sends the delivery confirmation to crew application **306** (message **P10**). Crew application **306** displays a delivery confirmation status update to crew member **308** (message **P11**). This delivery confirmation status update indicates that passenger **300** has acknowledged seeing the notification.

In this manner, the message flow in **Figure 6** illustrates feedback that occurs through boarding application **302** and passenger **300**. For example, if a confirmation is not received from boarding application **322** that is generated by boarding application **322**, then crew member **308** knows that the notification was not received at the client device on which boarding application **302** runs.

If the notification is received by boarding application **302**, boarding application **302** may indicate that the notification has been received. If passenger **300** does not respond with user input for a confirmation, then crew member **308** will know that the notification has been received, but not seen by passenger **300**. If passenger **300** enters a confirmation into boarding application **302**, then crew member **308** also knows that passenger **300** has seen the notification.

In one illustrative example, the notifications in **Figure 6** may be to board groups of passengers. For example, notifications may be sent to specific groups of passengers to proceed to the gate at different times. As a result, a reduction in the time needed to board the aircraft may be reduced. In this manner, boarding passengers by groups may be made more efficient by using the boarding manager to send notifications to passengers.

The illustrations of the message flow diagrams in **Figures 3-6** are provided only as examples of message flow that may occur in coordinating boarding activities between a boarding crew and passengers. The coordination of these activities may include other types of message flow to exchange information between a boarding crew and passengers. For example, other types of message flow may include sending directions to the gate from the current location for a specific passenger, a request for a change in seat assignments, a request from a passenger for assistance to reach the gate, or other suitable types of information exchange.

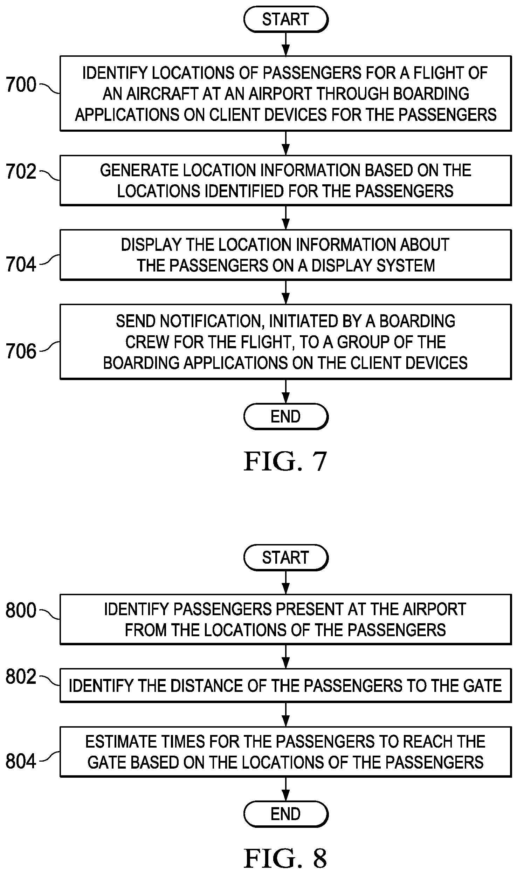

Turning next to **Figure 7**, an illustration of a flowchart of a process for managing an aircraft departure is depicted in accordance with an illustrative embodiment. The process illustrated in **Figure 7** may be implemented in airport environment **200** as shown in block form in **Figure 2**. For example, the different operations shown in this flowchart may be performed by boarding manager **218** as shown block form in **Figure 2**. These operations may be implemented in software that is loaded onto and run on one or more data processing systems.

The process begins by identifying locations of passengers for a flight of an aircraft at an airport through boarding applications on client devices for the passengers (operation **700**). In this illustrative example, the locations may be actual or approximate locations. Approximate locations may be used when depending on privacy concerns. For example, passengers may enter locations based on areas in which the passengers are located.

The process generates location information based on the locations identified for the passengers (operation **702**). The process displays the location information about the passengers on a display system (operation **704**). The location information is based on the locations of the passengers at the airport. This location information is used by the boarding crew to coordinate boarding activities for the flight.

The process sends notifications, initiated by a boarding crew for the flight, to a group of the boarding applications on the client devices (operation **706**), with the process terminating thereafter. Thus, the process in this flowchart may be used to coordinate boarding activities between a boarding crew for the flight using communications sent to the boarding applications from the boarding crew by the boarding manager based on locations of the passengers at the airport.

With reference now to **Figure 8**, an illustration of a flowchart of a process for generating location information is depicted in accordance with an illustrative embodiment. The process illustrated in this figure is an example of operations that may be used to implement operation **702** in **Figure 7**.

The process identifies passengers present at the airport from the locations of the passengers (operation **800**). The process identifies the distance of the passengers to the gate (operation **802**). The process also estimates times for the passengers to reach the gate based on the locations of the passengers (operation **804**). The process terminated thereafter. The times are a part of the location information displayed on a display system.

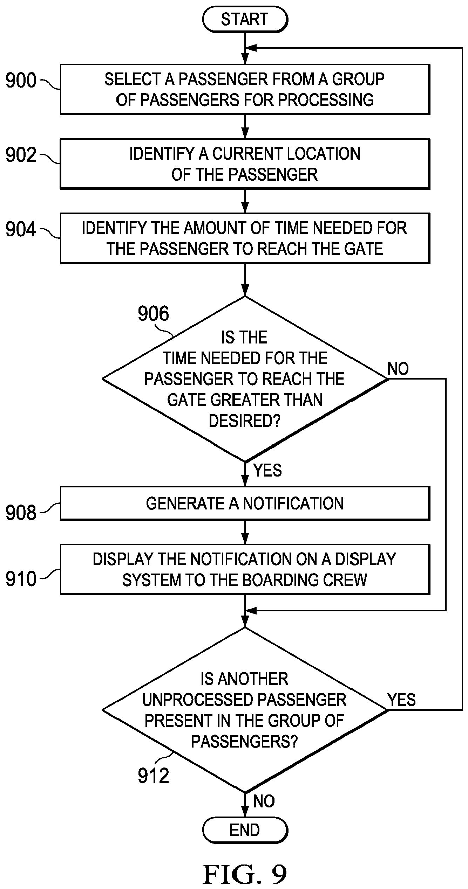

With reference next to **Figure 9**, an illustration of a flowchart of a process for generating notifications when passengers are unable to reach the gate within a desired amount of time is depicted in accordance with illustrative embodiment. The process illustrated in **Figure 3** may be implemented in boarding manager **218** in **Figure 2** to indicate to the boarding crew when passengers are too far from a gate to reach the gate in time for the flight.

The process begins by selecting a passenger from a group of passengers for processing (operation **900**). The process identifies a current location of the passenger (operation **902**). In this illustrative example, the location may be identified by at least one of Global positioning system (GPS) information, triangulation of signal strength, user input locations by passengers, or other suitable techniques.

The process then identifies the amount of time needed for the passenger to reach the gate (operation **904**). In this illustrative example, operation **904** may be made in a number different ways. For example, data may be collected on the movement of people from different locations at the airport. This data may be collected from other passengers who use boarding applications. This movement may be used identify the time needed to travel different distances along different routes within the airport. This data may be obtained for different times of the day and different days of the year. For example, the time needed to travel for a particular location to the gate may be longer during holiday season travel, as opposed to other times. This type of database may be used to more accurately identify the time needed for a passenger to reach the gate from a particular location at the airport.

A determination is made as to whether the time needed for the passenger to reach the gate is greater than desired for boarding the flight for the aircraft (operation **906**). The time desired may be identified in a number different ways. For example, the time may take into account the time needed to reach the gate and for the passenger to board the aircraft.

If the time for the passenger to reach the gate is greater than the remaining time to board the aircraft, the process generates a notification (operation **908**). In operation **908,** the passenger is at a location that takes more time than desired to reach the gate for boarding the flight. The process displays the notification on a display system to the boarding crew (operation **910**).

The process then determines whether another unprocessed passenger is present in the group of passengers (operation **912**). If another unprocessed passenger is present, the process returns to operation **900**. Otherwise, the process terminates. With reference again to operation **906**, if the time for the passenger to reach the gate is not greater than desired, the process proceeds to operation 912 as described above.

In this manner, the boarding crew is able to obtain notifications of passengers that are too far away from the gate. The boarding crew may make decisions for actions such as delay closing the gate, sending a motorized vehicle to pick up the passenger, notify the passenger that they missed the flight, or take some other suitable action. For example, another suitable action may be to allow a passenger on the stand-by list to board the flight. Further, the passenger missing the flight may be placed on a stand-by list for a subsequent flight.

The flowcharts and block diagrams in the different depicted embodiments illustrate the architecture, functionality, and operation of some possible implementations of apparatuses and methods in an illustrative embodiment. In this regard, each block in the flowcharts or block diagrams may represent at least one of a module, a segment, a function, or a portion of an operation or step. For example, one or more of the blocks may be implemented as program code, hardware, or a combination of the program code and hardware. When implemented in hardware, the hardware may, for example, take the form of integrated circuits that are manufactured or configured to perform one or more operations in the flowcharts or block diagrams. When implemented as a combination of program code and hardware, the implementation may take the form of firmware. Each block in the flowcharts or the block diagrams may be implemented using special purpose hardware systems that perform the different operations or combinations of special purpose hardware and program code run by the special purpose hardware.

In some alternative implementations of an illustrative embodiment, the function or functions noted in the blocks may occur out of the order noted in the figures. For example, in some cases, two blocks shown in succession may be performed substantially concurrently, or the blocks may sometimes be performed in the reverse order, depending upon the functionality involved. Also, other blocks may be added in addition to the illustrated blocks in a flowchart or block diagram.

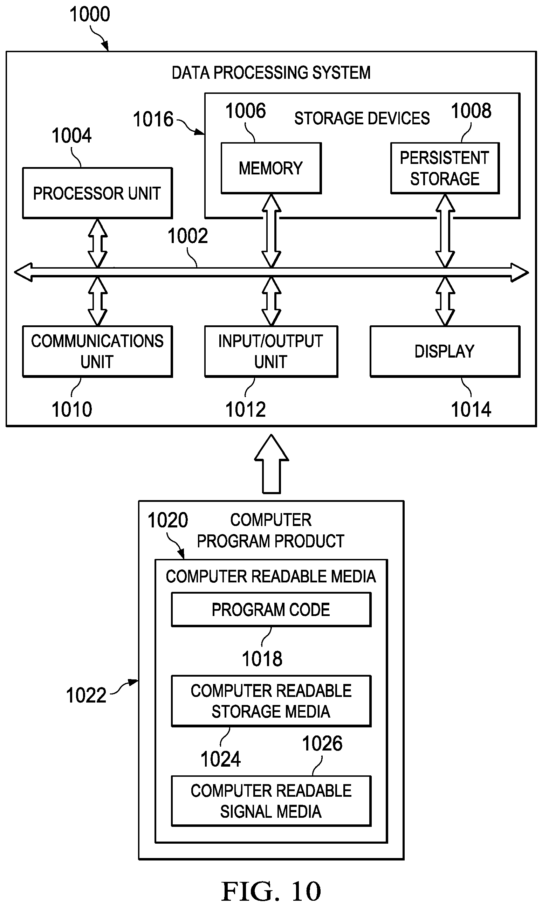

Turning now t**o** **Figure 10**, an illustration of a block diagram of a data processing system is depicted in accordance with an illustrative embodiment. Data processing system **1000** may be used to implement client devices **216**, computer system **220**, and boarding manager **218** in **Figure 2**. In this illustrative example, data processing system **1000** includes communications framework **1002**, which provides communications between processor unit **1004**, memory **1006**, persistent storage **1008**, communications unit **1010**, input/output (I/O) unit **1012**, and display **1014**. In this example, communications framework **1002** may take the form of a bus system.

Processor unit **1004** serves to execute instructions for software that may be loaded into memory **1006**. Processor unit **1004** may be a number of processors, a multi-processor core, or some other type of processor, depending on the particular implementation.

Memory **1006** and persistent storage **1008** are examples of storage devices **1016**. A storage device is any piece of hardware that is capable of storing information, such as, for example, without limitation, at least one of data, program code in functional form, or other suitable information either on a temporary basis, a permanent basis, or both on a temporary basis and a permanent basis. Storage devices **1016** may also be referred to as computer readable storage devices in these illustrative examples. Memory **1006**, in these examples, may be, for example, a random access memory or any other suitable volatile or non-volatile storage device. Persistent storage **1008** may take various forms, depending on the particular implementation.

For example, persistent storage **1008** may contain one or more components or devices. For example, persistent storage **1008** may be a hard drive, a solid state hard drive, a flash memory, a rewritable optical disk, a rewritable magnetic tape, or some combination of the above. The media used by persistent storage **1008** also may be removable. For example, a removable hard drive may be used for persistent storage **1008**.

Communications unit **1010**, in these illustrative examples, provides for communications with other data processing systems or devices. In these illustrative examples, communications unit **1010** is a network interface card.

Input/output unit **1012** allows for input and output of data with other devices that may be connected to data processing system **1000**. For example, input/output unit **1012** may provide a connection for user input through at least one of a keyboard, a mouse, or some other suitable input device. Further, input/output unit **1012** may send output to a printer. Display **1014** provides a mechanism to display information to a user.

Instructions for at least one of the operating system, applications, or programs may be located in storage devices **1016**, which are in communication with processor unit **1004** through communications framework **1002**. The processes of the different embodiments may be performed by processor unit **1004** using computer-implemented instructions, which may be located in a memory, such as memory **1006**.

These instructions are referred to as program code, computer usable program code, or computer readable program code that may be read and executed by a processor in processor unit **1004**. The program code in the different embodiments may be embodied on different physical or computer readable storage media, such as memory **1006** or persistent storage **1008**.

Program code **1018** is located in a functional form on computer readable media **1020** that is selectively removable and may be loaded onto or transferred to data processing system **1000** for execution by processor unit **1004**. Program code **1018** and computer readable media **1020** form computer program product **1022** in these illustrative examples. In one example, computer readable media **1020** may be computer readable storage media **1024** or computer readable signal media **1026**. In these illustrative examples, computer readable storage media **1024** is a physical or tangible storage device used to store program code **1018** rather than a medium that propagates or transmits program code **1018**.

Alternatively, program code **1018** may be transferred to data processing system **1000** using computer readable signal media **1026**. Computer readable signal media **1026** may be, for example, a propagated data signal containing program code **1018**. For example, computer readable signal media **1026** may be at least one of an electromagnetic signal, an optical signal, or any other suitable type of signal. These signals may be transmitted over at least one of communications links, such as wireless communications links, optical fiber cable, coaxial cable, a wire, or any other suitable type of communications link.

The different components illustrated for data processing system **1000** are not meant to provide architectural limitations to the manner in which different embodiments may be implemented. The different illustrative embodiments may be implemented in a data processing system including components in addition to or in place of those illustrated for data processing system **1000**. Other components shown in **Figure 10** can be varied from the illustrative examples shown. The different embodiments may be implemented using any hardware device or system capable of running program code **1018**.

Thus, the illustrative embodiments provide a method and apparatus for performing boarding activities to prepare an aircraft for departure from the gate. With one or more illustrative examples, a boarding crew may perform at least one of monitoring locations of passengers, sending notifications of boarding status to passengers, estimate time necessary for a passenger to reach the gate, or other operations that are performed in preparing an aircraft for departure from the gate.

In one illustrative example, a communication system is provided through a boarding manager in a computer system that facilitates the exchange of communications with boarding applications on client devices over a network. These communications allow the boarding crew to coordinate boarding activities with passengers. This coordination is selected to reduce delays in the departure of the aircraft from the gate. In this manner, flights may depart on time or closer to on time, costs caused by delays may be reduced, and passenger satisfaction may be increased.

For example, with the communications exchanged between the boarding crew and passengers, passenger satisfaction may be increased by reducing the risk of missing final call announcements for boarding an aircraft at a gate. Additionally, the boarding crew may delay closing the door to the aircraft knowing that the passenger is in route and will reach the aircraft within a desired amount of time. Further, by sending notifications to boarding applications on client devices, passengers who are hearing-challenged may see notifications that may otherwise be missed when made over a public announcement system at the airport.

In another example, the location of a passenger who has not reached the gate when time for boarding the aircraft is about to end are identified. The location of this passenger may be used by the boarding crew to determine whether the passenger will reach the gate within a desired amount of time. In other illustrative examples, the boarding manager may make a determination as to whether the passenger can reach the gate in time.

With this information, the boarding crew may take the actions necessary to assist the passenger who has not reached the gate. For example, the boarding crew may continue to wait for the passenger, send a notification to the passenger, send a crew member to locate or assist the passenger, send a tram to pick up the passenger, or perform some other suitable action. In this manner, the boarding crew may avoid requesting the unloading of baggage when a passenger will arrive in time to avoid an undesired delay of the flight.

In another example, the boarding manager may also be useful to reduce delays when gate changes occur. For example, a passenger may not yet be present at the gate shown on the boarding pass. If a gate change occurs, a notification of this change is sent to the boarding applications. In this manner, the passenger not yet at the current gate may proceed to the new gate, rather than reaching the current gate and then being redirected to the new gate.

The description of the different illustrative embodiments has been presented for purposes of illustration and description and is not intended to be exhaustive or limited to the embodiments in the form disclosed. The different illustrative examples describe components that perform actions or operations. In an illustrative embodiment, a component may be configured to perform the action or operation described. For example, the component may have a configuration or design for a structure that provides the component an ability to perform the action or operation that is described in the illustrative examples as being performed by the component.

Many modifications and variations will be apparent to those of ordinary skill in the art. For example, some embodiments may be applied to passengers on other types of vehicles other than aircraft. For example, a boarding manager may be used in a similar fashion to board passengers for a cruise ship, a train, a spacecraft, a bus, or some other suitable type of vehicle for which boarding activities may occur.
Further, the disclosure comprises embodiments according to the following clauses:
Clause 1. An airport communications system for boarding an aircraft comprising:
   a display system; and
   a boarding manager in communication with the display system, wherein the boarding manager is configured to identify locations of passengers for a flight of the aircraft at an airport through boarding applications on client devices for the passengers; display location information about the passengers on the display system in which the location information is based on the locations of the passengers at the airport; and send notifications, initiated by a boarding crew for the flight, to a group of the boarding applications on the client devices.
Clause 2. The airport communications system of Clause 1, wherein the boarding manager is configured to receive communications from the boarding applications, enabling interaction between the boarding crew and the passengers.
Clause 3. The airport communications system of Clause 2, wherein the communications are selected from at least one of a receive receipt for a notification sent to the group of the boarding applications and a response to the notification sent by the boarding manager, wherein the response is generated by user input to a boarding application.
Clause 4. The airport communications system of Clauses 1, 2 or 3, wherein the boarding manager is configured to send a missed flight notification to a baggage handling system for the flight when a passenger is identified as unable to board the aircraft for the flight.
Clause 5. The airport communications system of Clauses 1, 2, 3 or 4, wherein the boarding manager is configured to estimate times for the passengers to reach a gate based on the locations of the passengers.
Clause 6. The airport communications system of Clauses 1, 2, 3, 4 or 5, wherein the boarding manager is configured to determine whether a passenger is present at the airport by identifying a location of the passenger.
Clause 7. The airport communications system of Clauses 1, 2, 3, 4, 5 or 6, wherein the boarding manager is configured to send flight status information for the flight to the boarding applications, wherein the flight status information is selected from at least one of gate information, terminal information, a flight status, a delay, a cancellation, and a connecting flight status.
Clause 8. The airport communications system of Clauses 1, 2, 3, 4, 5, 6 or 7, wherein the boarding manager is configured to send a boarding application to a client device when the application is requested by the client device.
Clause 9. The airport communications system of Clauses 6, 7 or 8, wherein the passenger initiates a request from a client device when at the airport.
Clause 10. The airport communications system of Clauses 1, 2, 3, 4, 5, 6, 7 or 8, wherein the location information includes at least one of a current location, a direction of travel, a distance to a gate, or a time needed to reach the gate.
Clause 11. The airport communications system of Clauses 1, 2, 3, 4, 5, 6, 7, 8, 9 or 10, wherein the notifications are selected from at least one of a boarding notification, a delay notification, a time needed to reach a gate for the flight, a remaining time before boarding starts, a remaining time before boarding ends, a suggested route to the gate, a final call for boarding, or a missed flight notification.
Clause 12. The airport communications system of Clauses 1, 2, 3, 4, 5, 6, 7, 8, 9, 10 or 11, wherein the passengers using the boarding applications on the client devices are provided with incentives.
Clause 13. The airport communications system of Clauses 1, 2, 3, 4, 5, 6, 7, 8, 9, 10, 11 or 12, wherein the client devices are selected from at least one of a mobile phone, a tablet computer, and a laptop computer.
Clause 14. A method for managing an aircraft departure, the method comprising:
   identifying locations of passengers for a flight of an aircraft at an airport through boarding applications on client devices for the passengers;
   displaying location information about the passengers on a display system, wherein the location information is based on the locations of the passengers at the airport; and
   sending notifications, initiated by a boarding crew for the flight, to a group of the boarding applications on the client devices.
Clause 15. The method of Clause 14 further comprising:
   estimating times for the passengers to reach a gate based on the locations of the passengers, wherein the times are a part of the location information displayed on the display system.
Clause 16. The method of Clause 15 further comprising:
   determining whether a passenger requires a time to reach the gate that is greater than desired for boarding the flight; and
   displaying a notification on the display system to the boarding crew when the passenger is at a location that takes more time than desired to reach the gate for boarding the flight.
Clause 17. The method of Clauses 14, 15 or 16further comprising:
   determining whether a passenger is present at the airport by identifying a location of the passenger in the airport.
Clause 18. The method of Clauses 14, 15, 16 or 17 further comprising:
   sending flight status information for the flight to the boarding applications, wherein the flight status information is selected from at least one of gate information, terminal information, a flight status, delays, cancellations, and a connecting flight status.
Clause 19. The method of Clauses 14, 15, 16, 17 or 18, further comprising:
   sending a boarding application to a client device when the boarding application is requested by the client device.
Clause 20. The method of Clause 19, wherein a passenger initiates a request from the client device when at the airport.
Clause 21. The method of Clauses 14, 15, 16, 17, 18, 19 or 20, wherein the location information includes at least one of a current location, a distance to a gate, and a time needed to reach the gate.
Clause 22. The method of Clauses 14, 15, 16, 17, 18, 19, 20 or 21, wherein the notifications are selected from at least one of a boarding notification, a delay notification, a time needed to reach a gate for the flight, a remaining time before boarding starts, a remaining time before boarding ends, a suggested route to the gate, a final call for boarding, or a missed flight notification.
Clause 23. The method of Clauses 14, 15, 16, 17, 18, 19, 20, 21 or 22, wherein the client devices are selected from at least one of a mobile phone, a tablet computer, and a laptop computer.
Clause 24. An airport communications system for boarding an aircraft comprising:
   a boarding manager configured to identify locations of passengers at an airport for a flight of the aircraft departing from the airport through boarding applications on client devices for the passengers and coordinate boarding activities between a boarding crew for the flight using communications sent to the boarding applications from the boarding crew by the boarding manager based on the locations of the passengers in the airport.

Further, different illustrative embodiments may provide different features as compared to other desirable embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. An airport communications system for boarding an aircraft comprising:
a display system (230); and
a boarding manager (218) in communication with the display system (230), wherein the boarding manager (218) is configured to identify locations (228) of passengers (202) for a flight (206) of the aircraft at an airport (102) through boarding applications (222) on client devices (216) for the passengers (202); display location information (232) about the passengers (202) on the display system (230) in which the location information (232) is based on the locations (228) of the passengers (202) at the airport (102); and send notifications (236), initiated by a boarding crew (212) for the flight (206), to a group of the boarding applications (222) on the client devices (216).

2. The airport communications system of claim 1,
wherein the boarding manager (218) is configured to receive communications (234) from the boarding applications (222), enabling interaction between the boarding crew (212) and the passengers (202).

3. The airport communications system of claim 2,
wherein the communications (234) are selected from at least one of a receive receipt for a notification sent to the group of the boarding applications (222) and a response to the notification sent by the boarding manager (218), wherein the response is generated by user input to a boarding application (302).

4. The airport communications system of any preceding claim, wherein the boarding manager (218) is configured to send a missed flight notification (238) to a baggage handling system (240) for the flight (206) when a passenger (242) is identified as unable to board the aircraft for the flight (206).

5. The airport communications system of any preceding claim, wherein the boarding manager (218) is configured to estimate times (244) for the passengers (202) to reach a gate (210) based on the locations (228) of the passengers (202).

6. The airport communications system of any preceding claim, wherein the boarding manager (218) is configured to determine whether a passenger (242) is present at the airport (102) by identifying a location (246) of the passenger (242).

7. The airport communications system of any preceding claim, wherein the boarding manager (218) is configured to send flight status information for the flight (206) to the boarding applications (222), wherein the flight status information is selected from at least one of gate information, terminal information, a flight status, a delay, a cancellation, and a connecting flight status.

8. The airport communications system of any preceding claim, wherein the boarding manager (218) is configured to send a boarding application (302) to a client device (216) when the application is requested by the client device (216), and wherein, optionally, the passenger (242) initiates a request from a client device when at the airport (102).

9. The airport communications system of any preceding claim, wherein the location information (232) includes at least one of a current location, a direction of travel, a distance to a gate (210), or a time needed to reach the gate (210).

10. The airport communications system of any preceding claim, wherein the notifications (236) are selected from at least one of a boarding notification, a delay notification, a time needed to reach a gate (210) for the flight (206), a remaining time before boarding starts, a remaining time before boarding ends, a suggested route to the gate (210), a final call for boarding, or a missed flight notification (238).

11. The airport communications system of any preceding claim, wherein the passengers (202) using the boarding applications (222) on the client devices (216) are provided with incentives.

12. A method for managing an aircraft departure, the method comprising:
identifying locations (228) of passengers (202) for a flight (206) of an aircraft at an airport (102) through boarding applications (222) on client devices (216) for the passengers (202);
displaying location information (232) about the passengers (202) on a display system (230), wherein the location information (232) is based on the locations (228) of the passengers (202) at the airport (102); and
sending notifications (236), initiated by a boarding crew (212) for the flight (206), to a group of the boarding applications (222) on the client devices (216).

13. The method of claim 12 further comprising:
estimating times (244) for the passengers (202) to reach a gate (210) based on the locations (228) of the passengers (202), wherein the times (244) are a part of the location information (232) displayed on the display system (230).

14. The method of claim 13 further comprising:
determining whether a passenger (242) requires a time to reach the gate (210) that is greater than desired for boarding the flight (206); and
displaying a notification on the display system (230) to the boarding crew (212) when the passenger (242) is at a location (246) that takes more time than desired to reach the gate (210) for boarding the flight (206).

15. The method of claims 12, 13 or 14 further comprising:
sending a boarding application (302) to a client device when the boarding application (302) is requested by the client device, and wherein, optionally, a passenger (242) initiates a request from the client device when at the airport (102).
